# EUROPÄISCHE PATENTANMELDUNG

(11) **EP 1 788 134 A1**
(43) Veröffentlichungstag der Anmeldung: **23.05.2007**
(21) Anmeldenummer: 06010671.3
(22) Anmeldetag: 23.05.2006
(51) Int. Cl.: D04C 3/48, F16N 7/32

(54) **Schmiersystem sowie Verfahren zum Schmieren**

(30) Priorität: 17.11.2005 DE 102005054907
(71) Anmelder: MASCHINENFABRIK NIEHOFF GMBH & CO. KG, D-91126 Schwabach (DE)
(72) Erfinder: Emmerich, Wolfgang, 59071 Hamm (DE)
(74) Vertreter: Wallinger, Michael

(57) **Zusammenfassung**

Die Erfindung betrifft ein Schmiersystem zum Schmieren einer Gleitfläche in einer Maschine, insbesondere einer Gleitfläche in einer Flechtmaschine. Das Schmiersystem hat hierzu eine Schmiermittelversorgung (44), die zur Versorgung der Gleitfläche (20, 26) mit Schmiermittel mit mindestens einem Schmiermittelkanal (32) verbunden ist, welcher in mindestens einer an der oder nahe der Gleitfläche (20, 26) ausgebildeten Abgabeöffnung (34) endet. Erfindungsgemäß erzeugt die Schmiermittelversorgung (44) ein Schmiermittel-Gas-Gemisch mit einem vorgegebenen Verhältnis Schmiermittel zu Gas, welches dem Schmiermittelkanal (32) zuzuführen ist. Das Schmiermittel wird anschließend durch eine vor der Abgabeöffnung (34) des Schmiermittelkanals (32) vorgesehene Abscheideeinrichtung (30) zumindest teilweise aus dem Schmiermittel-Gas-Gemisch abgeschieden. Des weiteren betrifft die Erfindung ein Verfahren zum Schmieren von Gleitflächen.

## Beschreibung

Die Erfindung betrifft ein Schmiersystem zum Schmieren einer Gleitfläche in einer Maschine, insbesondere einer Gleitfläche in einer Rotations- Flechtmaschine, mit einer Schmiermittelversorgung, die zur Versorgung der Gleitfläche mit Schmiermittel mit mindestens einem Schmiermittelkanal verbunden ist, welcher in mindestens einer an der oder nahe der Gleitfläche ausgebildeten Abgabeöffnung endet. Des weiteren betrifft die Erfindung ein Verfahren zum Schmieren einer Gleitfläche in einer Maschine.

Ein Schmiersystem der eingangs genannten Art kommt insbesondere bei Maschinen zum Einsatz, die mit Gleitbahnen ausgestattet sind, an welchen Schlitten geführt sind. Unter dem Begriff Schlitten wird in diesem Zusammenhang jede Maschinenkomponente verstanden, die an einer Gleitbahn definiert geführt ist, unabhängig davon, ob die Maschinenkomponente über einen eigenen Antrieb verfügt oder nicht. So beispielsweise Trägerschlitten für Funktionseinheiten wie Spulenträger, Werkzeugschlitten, Transportschlitten, Werkzeugtische, Werkzeugwechsler und ähnliches.

Bei der Schmierung der Gleitflächen einer Gleitbahn besteht in Maschinen das Problem, dass entweder zu wenig oder zu viel Schmiermittel den Gleitflächen der Gleitbahn zugeführt wird. Wird zuwenig Schmiermittel zugeführt, nimmt die Reibung zwischen der geschmierten Gleitfläche und dem an der Gleitfläche geführten Schlitten zu, wodurch sich einerseits der Verschleiß an den Gleitflächen und den Führungselementen des Schlittens erhöht, während andererseits die Positioniergenauigkeit des Schlittens abnimmt. Wird dagegen zuviel Schmiermittel zugeführt, wird das überschüssige Schmiermittel von dem sich bewegenden Schlitten von der Gleitbahn in die Maschine verdrängt bzw. geschleudert, wodurch einerseits der Verbrauch an Schmiermittel unnötig hoch ist, während andererseits die Maschine sowie die mit der Maschine zu bearbeiteten oder zu transportierenden Werkstücke verunreinigt werden.

Insbesondere bei Flechtmaschinen, wie Rotationsflechtmaschinen, besteht das Problem der Verunreinigung bei zuviel Schmiermittel. So werden bei Flechtmaschinen Spulenträger, die zum definierten Führen des zu flechtenden Gutes, wie Drähte oder Fäden, durch Schlitten an Gleitbahnen geführt sind, mit hohen Geschwindigkeiten entlang der Gleitbahn bewegt. Wird nun auf die Gleitflächen der Gleitbahn zuviel Schmiermittel aufgebracht, wird das überschüssige Schmiermittel durch die sich schnell bewegenden Schlitten von den Gleitflächen geschleudert und gelangt so in die Flechtmaschine und verunreinigt gegebenenfalls sogar das Flechtgut.

Ausgehend von diesem Stand der Technik ist es die Aufgabe der Erfindung, ein Schmiersystem bzw. ein Verfahren zum Schmieren einer Gleitfläche in einer Maschine bereitzustellen, mit dem bzw. durch das das Schmiermittel der Gleitfläche insbesondere definiert zugeführt werden kann.

Erfindungsgemäß wird diese Aufgabe durch ein Schmiersystem mit den Merkmalen nach Anspruch 1 gelöst. Ferner wird die Aufgabe durch ein Verfahren mit den Merkmalen nach Anspruch 11 gelöst. Bevorzugte Ausführungsformen bzw. Verfahrensvarianten sind Gegenstand der Unteransprüche.

So wird gemäß Anspruch 1 insbesondere vorgeschlagen, dass die Schmiermittelversorgung ein Schmiermittel-Gas-Gemisch mit einem vorgegebenen Verhältnis Schmiermittel zu Gas erzeugt, welches dem Schmiermittelkanal zuzuführen ist, und dass vor der Abgabeöffnung des Schmiermittelkanals eine Abscheideeinrichtung zum zumindest teilweisen Abscheiden des Schmiermittels aus dem Schmiermittel-Gas-Gemisch vorgesehen ist.

Bei dem erfindungsgemäßen Schmiersystem wird das Schmiermittel nicht direkt der Gleitfläche durch den Schmiermittelkanal zugeführt. Vielmehr wird zunächst ein Schmiermittel-Gas-Gemisch erzeugt, bei dem ein vorgegebenes Verhältnis Schmiermittel zu Gas eingestellt wird. Das Gas, das mit ausreichender Strömungsgeschwindigkeit dem Schmiermittelkanal zugeführt wird, dient hierbei als Fördermittel für das eigentliche Schmiermittel.

Unter Gas im Sinne der vorliegenden Erfindung werden Gase, Gasmischungen aber auch Mischungen von Gas mit nicht gasförmigen aber durch das Gas transportierbaren Stoffen verstanden. Insbesondere wird unter Gas Luft verstanden, statt Luft können aber auch technische Gase verwendet werden, wenn dies z.B. in Hinblick auf die Oxidation des Schmiermittels von Vorteil ist.

Als Gas können aber auch Mischungen von Gasen mit Flüssigkeiten Verwendung finden, die dann z.B. der Kühlung dienen können. Die Flüssigkeiten müssen in diesen Fällen allerdings in solchen zu Tröpfchen oder Nebel zerstäubt werden, die ein Mitführen mit dem Gas gestatten.

Unter dem Begriff Schmiermittel im Sinne der vorliegenden Erfindung wer den sowohl organische als auch synthetische Schmiermittel verstanden, die in flüssiger Form als Schmieröl, Esther etc. vorliegen können femer als Fette, Pasten und dergleichen und auch als Feststoffe, z.B. in Pulverform vor. Wie es maßgeblich ist, dass das Schmiermittel in einer solchen Form vorliegt oder durch Zerstäubungseinrichtungen etc. in eine solche Form gebracht werden kann, dass es vom Gasstrom mitgeführt werden kann.

Das erzeugte Schmiermittel-Gas-Gemisch, das eine definiert vorgegebene Schmiermittelkonzentration enthält, wird anschließend zum Schmiermittelkanal gefördert. In Strömungsrichtung des Schmiermittel-Gas-Gemisches gesehen vor der Abgabeöffnung des Schmiermittelkanals ist vorzugsweise eine Abscheideeinrichtung angeordnet, mit der das in dem Schmiermittel-Gas-Gemisch enthaltene Schmiermittel wieder abgeschieden wird. Das abgeschiedene Schmiermittel gelangt dann durch die mindestens eine Abgabeöffnung des Schmiermittelkanals zur Gleitfläche, auf der es von dem sich an der Abgabeöffnung vorbeibewegenden Schlitten mitgenommen und auf der Gleitfläche verteilt wird. Durch das erfindungsgemäße Schmiersystem wird erreicht, dass definierte Mengen Schmiermittel der Gleitfläche zugeführt werden, ohne dass es zu einer Überschmierung der Gleitfläche kommt.

Weitere Vorteile und Vorzüge der Erfindung ergeben sich aus der nachfolgenden Beschreibung sowie der Zeichnung.

So wird bei einer besonders bevorzugten Ausführungsform des erfindungsgemäßen Schmiersystems zum Erzeugen des Schmiermittel-Gas-Gemisches mindestens eine Düse verwendet, welche in der Schmiermittelversorgung vorgesehen ist. Mit Hilfe dieser Düse wird eine vorgegebene Menge Schmiermittel in einem Gasstrom mit definiertem Volumenstrom zerstäubt.

Das Verhältnis Schmiermittel zu Gas wird vorzugsweise durch Einstellen der Schmiermittelmenge und/oder des Gasvolumenstroms, d.h. des pro Zeiteinheit geförderten Gasvolumens, verändert. Die Schmiermittelmenge kann hierbei beispielsweise durch eine entsprechende Förderpumpe eingestellt werden. Ferner ist es möglich, das Schmiermittel mit Hilfe einer Einspritzdüse zu zerstäuben, die mit Hilfe einer Düsennadel zum Einstellen der abzugebenden Menge an Schmiermittel verschließbar ist. Der Volumenstrom des Gases kann entweder konstant gehalten oder aber mit Hilfe einer Stelleinrichtung, beispielsweise einer Drosselklappe, verändert werden.

Besonders bevorzugt stellt die Schmiermittelversorgung das Verhältnis Schmiermittel zu Gas in Abhängigkeit von mindestens einem Maschinenparameter ein. Hierzu eignet sich beispielsweise die Relativgeschwindigkeit zwischen der Gleitfläche und dem an der Gleitfläche geführten Schlitten. Basierend auf beispielsweise in einer Datenbank abgespeicherten Referenzwerten kann dann in Abhängigkeit von der Relativgeschwindigkeit des Schlittens an der Gleitbahn ein jeweils geeignetes Verhältnis Schmiermittel zu Gas und damit die an die Schmierstelle zu fördernde Schmiermittelmenge eingestellt werden.

Bei einer besonders bevorzugten Ausführungsform ist die Abscheideeinrichtung, mit der das Schmiermittel aus dem Schmiermittel-Gas-Gemisch abgeschieden werden soll, in den Schmiermittelkanal integriert. Auf diese Weise kann bei dem erfindungsgemäßen Schmiersystem auf das Vorsehen zusätzlicher Komponenten zum Abscheiden des Schmiermittels verzichtet werden.

Zum Abscheiden des Schmiermittels aus dem Schmiermittel-Gas-Gemisch weist die Abcheideeinrichtung vorzugsweise eine Abscheidedüse und einen in Strömungsrichtung gesehen nachgeordneten Entspannungsraum auf. Durch das Verdichten des Schmiermittel-Gas-Gemisches in der Abscheidedüse und das nachgeordnete schlagartige Entspannen im Entspannungsraum wird erreicht, dass sich das Schmiermittel in dem Entspannungsraum abschlägt und nahezu vollständig aus dem Schmiermittel-Gas-Gemisch ausgeschieden werden kann. Das so von Schmiermittel befreite Gas kann dann gegebenenfalls über den Schmiermittelkanal abströmen und dabei das abgeschiedene Schmiermittel der Abgabeöffnung des Schmiermittelkanals zuführen. Das Gas dient dann nicht nur als Transportmittel für das Schmiermittel in zerstäubter Form, sondern gleichzeitig auch als Transportmittel für das abgeschiedene Schmiermittel, welches der Schmierstelle zugeführt werden soll. Alternativ kann das Gas auch durch eine andere Öffnung abgeführt werden.

Um ein möglichst vollständiges Abscheiden des Schmiermittels aus dem Schmiermittel-Gas-Gemisch zu erreichen, ist die Düsenöffnung der Abscheiderdüse auf eine Prallfläche in Entspannungsraum derart gerichtet, dass das austretende Schmiermittel-Gas-Gemisch unmittelbar auf die Prallfläche auftrifft. Ist die Abscheideeinrichtung in den Schmiermittelkanal integriert, wird femer vorgeschlagen als Prallfläche eine in den Schmiermittelkanal eingesetzte Prallplatte zu verwenden. Die Prallplatte muss dabei nicht zwangsläufig eben ausgebildet sein. Sie kann gegebenenfalls auch gekrümmt ausgebildet sein, um die Abscheidewirkung noch zu erhöhen.

Um eine möglichst gleichmäßige Versorgung der Gleitfläche mit Schmiermittel zu erreichen, wird ferner vorgeschlagen, an der Gleitfläche verteilt mehrere Abgabeöffnungen vorzusehen, die mit dem Schmiermittelkanal gemeinsam verbunden sind. Auf dieser Weise kann eine sehr definierte Zuführung des Schmiermittels zur Gleitfläche erreicht werden. Bei der Anordnung der Abgabeöffnungen kann hierbei insbesondere berücksichtigt werden, welche Bereiche der Gleichfläche stärker geschmiert sein müssen als andere, in dem beispielsweise die stärker zu schmierenden Bereiche mit mehr Abgabenöffnungen versehen sind, während die weniger stark zu schmierenden Bereiche weniger Abgabenöffnungen aufweisen.

Eine besonders gleichmäßige Versorgung der Gleitfläche mit Schmiermittel wird erreicht, wenn die Schmiermittelversorgung mit mehreren Schmiermittelkanälen gleichzeitig in Verbindung steht. Auf dieser Weise ist sichergestellt, dass sämtliche Schmiermittelkanäle mit dem Schmiermittel-Gas-Gemisch versorgt werden, wobei das Verhältnis Schmiermittel zu Gas im Schmiermittel-Gas-Gemisch identisch ist. Um zu erreichen, dass das Schmiermittel möglichst spät abgeschieden wird, ist bei einer Weiterbildung dieser Ausführungsform für jeden Schmiermittelkanal eine eigenständige Abscheideeinrichtung vorgesehen.

Alternativ ist es auch denkbar, eine der Schmiermittelversorgung nachgeordnete zentrale Abscheideeinrichtung vorzusehen, welch dann das abgeschiedene Öl an die einzelnen Schmiermittelkanäle weiterleitet. Dies ist insbesondere dann von Vorteil, wenn nur eine geringe Anzahl von beispielsweise zwei oder drei Schmiermittelkanälen mit Schmiermittel versorgt werden sollen.

Gemäß einem weiteren Aspekt betrifft die Erfindung ein Verfahren, wie es in Anspruch 12 definiert ist. Bei diesem erfindungsgemäßen Verfahren wird zum Schmieren einer Gleitfläche in einer Maschine zunächst ein Gemisch aus Schmiermittel und Gas erzeugt. Anschließend wird dieses Schmiermittel-Gas-Gemisch der zu schmierenden Gleitfläche zugeleitet und, bevor das Schmiermittel-Gas-Gemisch die Gleitfläche erreicht, das Schmiermittel zumindest teilweise aus dem Schmiermittel-Gas-Gemisch abgeschieden. Das so abgeschiedene Schmiermittel wird anschließend der Gleitfläche zur Schmierung zugeführt. Bei einer besonderen Variante des Verfahrens wird vorgeschlagen, zum Erzeugen des Schmiermittel-Gas-Gemisches eine vorgegebene Menge Schmiermittel in einen Gasstrom mit vorgegebenem Volumenstrom einzubringen. Dies kann beispielsweise durch Zerstäuben mit Hilfe einer Zerstäuberdüse erfolgen.

Nachfolgend wird die Erfindung anhand eines Ausführungsbeispieles unter Bezugnahme auf die Zeichnung näher erläutert. Darin zeigt:
- Fig. 1: eine Draufsicht auf eine rotationssymmetrische Gleitbahn einer Rotationsflechtmaschine, welche mit einem erfindungsgemäßen Schmiersystem ausgestattet ist,
- Fig. 2: eine vergrößerte Draufsicht auf eines der acht Bahnsegmente, aus denen die Gleitbahn gebildet ist, und
- Fig. 3: einen vergrößerten Ausschnitt des Bahnsegmentes nach Fig. 2.

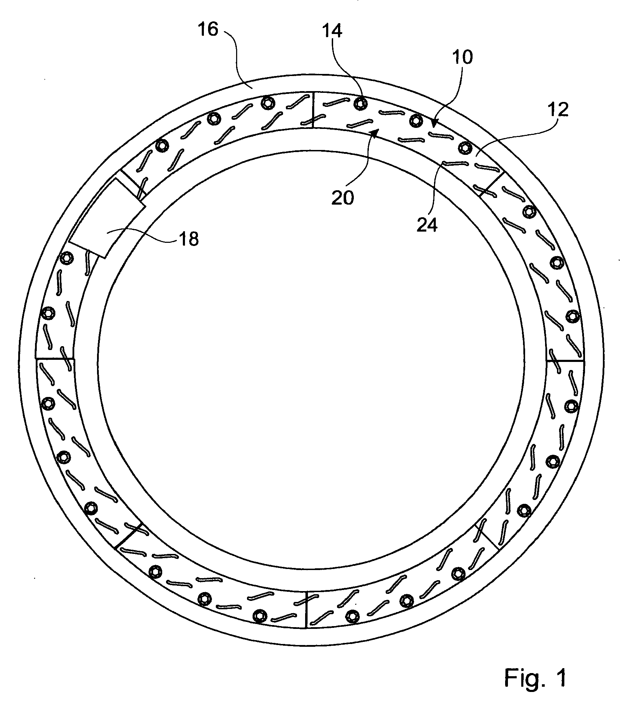

In Fig. 1 ist in Draufsicht eine ringförmige Gleitbahn 10 für eine Rotationsflechtmaschine gezeigt. Die Gleitbahn 10 ist aus insgesamt acht Bahnsegmenten 12 gebildet. Jedes der Bahnsegmente 12 ist durch drei Befestigungsschrauben 14 an einem gemeinsamen Träger 16 befestigt. Die Gleitbahn 10 dient zum Führen mehrerer Schlitten 18, an denen so genannte Spulenträger (nicht dargestellt) in bekannter Weise gehalten sind. Aus Übersichtlichkeitsgründen ist lediglich einer der Schlitten 18 gezeigt. Um eine sichere Führung der Schlitten 18 zu gewährleisten, ist der Schlitten 18 sowohl an der Oberseite, der Unterseite als auch an der radial innen angeordneten bogenförmigen Innenseite der Gleitbahn 10 geführt.

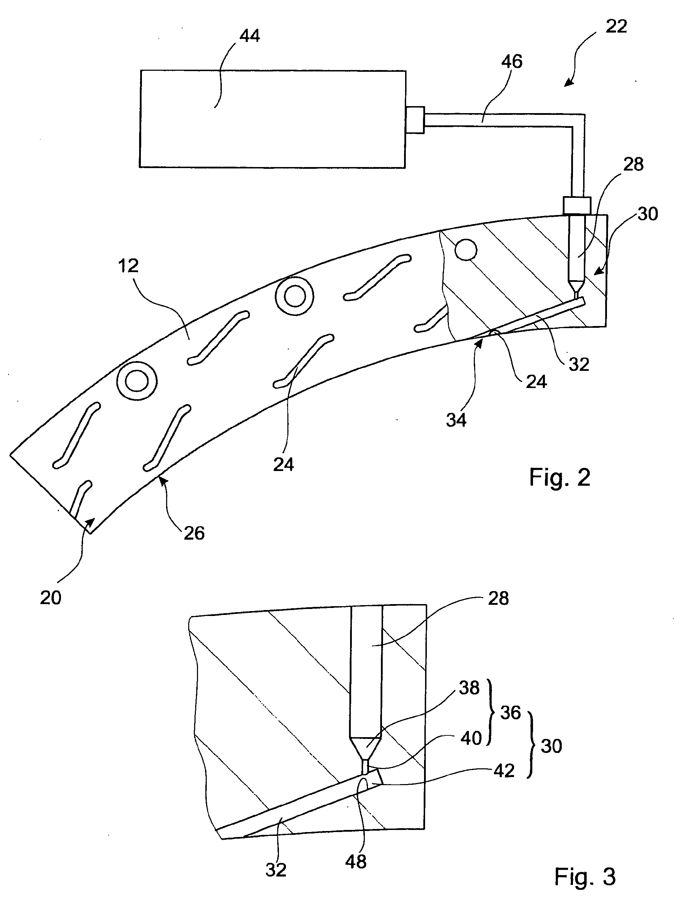

Damit die Schlitten 18 möglichst reibungsfrei an den Bahnsegmenten 12 geführt sind, ist ein zentrales Schmiersystem 22 vorgesehen, dessen Ausbau nachfolgend unter Bezugnahme auf die Fig. 2 und 3 näher erläutert ist.

In Fig. 2 ist in Draufsicht eines der Bahnsegmente 12 vergrößert dargestellt. Die oben gezeigte obere Gleitfläche 20 des Bahnsegmentes 12 ist mit mehreren Schmiernuten 24 versehen, in denen sich Schmiermittel, beispielsweise ein geeignetes Schmieröl, sammeln soll. Des weiteren ist die Oberfläche der Gleitfläche 20 zwischen den einzelnen Schmiernuten 24 geschabt, damit sich ein möglichst gleichmäßiger Schmiermittelfilm auf der Gleitfläche 20 ausbildet. In entsprechender Weise ist auch die Unterseite des Bahnsegmentes 12 als Gleitfläche ausgebildet. Die radial innen liegende innere Gleitfläche 26 ist an ihrer Oberfläche gleichfalls mit entsprechenden Schmiernuten 24 versehen und zwischen den Schmiernuten 24 geschabt.

Um die Schmiernuten 24 der inneren Gleitfläche 26 mit Schmiermittel zu ver sorgen, ist nahe dem in Fig. 2 rechts gezeigten Ende des Bahnsegmentes 12 eine sich etwa über zwei drittel der Breite des Bahnsegmentes 12 in radialer Richtung erstreckende Anschlussbohrung 28 vorgesehen. Die Anschlussbohrung 28 steht über eine Abscheideeinrichtung 30, mit einem Schmiermittelkanal 32 in Strömungsverbindung. Der Schmiermittelkanal 32 verläuft bezogen auf die Kante des in Fig. 2 rechts dargestellten Endes unter einem Winkel von etwa 70 ° sowie parallel und mittig zwischen der Ober und Unterseite des Bahnsegmentes 12 und endet in einer an der inneren Gleitfläche 26 ausgebildeten Abgabeöffnung 34.

In Fig. 3 ist die Anschlussbohrung 28, die Abscheideeinrichtung 30 und der Schmiermittelkanal 32 in vergrößerter Darstellung zu sehen. Die Abscheideeinrichtung 30 ist aus einer sich an die Anschlussbohrung 28 anschließenden Abscheiderdüse 36 gebildet, welche durch einen sich kegelförmig verjüngenden Abschnitt 38 und einen sich an diesen anschließenden Düsenkanal 40 realisiert ist. Der Düsenkanal 40 mündet in den Schmiermittelkanal 32, wobei der sich unmittelbar an den Düsenkanal 40 anschließende Abschnitt des Schmiermittelkanals 32 als Entspannungsraum 42 für die Abscheiderdüse 36 dient.

Wie Fig. 2 weiter zeigt, ist an die Anschlussbohrung 28 eine Schmiermittelversorgung 44 über ein Leitungssystem 46 angeschlossen. In der Schmiermittelversorgung wird mit Hilfe einer nicht dargestellten Zerstäuberdüse das Schmiermittel, beispielsweise ein Schmieröl, in einem Gasstrom zerstäubt. Dabei wird mit Hilfe einer nicht dargestellten Dosiereinrichtung eine definierte Menge Schmiermittel pro Zeiteinheit der Zerstäuberdüse zugeführt, während mit Hilfe einer Drossel der Gasvolumenstrom entsprechend eingestellt werden kann. Als Gas wir im vorliegenden Fall Luft verwendet.

Das Verhältnis zwischen Schmiermittel und Gas, hier Schmieröl und Luft, wird in Abhängigkeit von mindestens einem Maschinenparameter eingestellt. Hierzu eignet sich insbesondere die Relativgeschwindigkeit des Schlittens 18 bezogen auf die innere Gleitfläche 26.

Das von der Schmiermittelversorgung 44 erzeugte Schmiermittel-Gas-Gemisch wird über die Versorgungsleitung 46 in die Anschlussbohrung 28 gefördert, in der es weiter in die Abscheiderdüse 36 strömt. Beim Durchströmen der Abscheiderdüse 36 wird das Schmiermittel-Gas-Gemisch verdichtet und entspannt sich schlagartig nach Durchströmen des Düsenkanals 40 im Entspannungsraum 42. Dabei entstehen größere Schmiermitteltröpfchen, welche gegen die gegenüberliegende Innenwand des Schmiermittelkanals 32, der sogenannten Prallwand 48 geschleudert werden und sich an dieser abscheiden.

Das sich in dem Schmiermittelkanal 32 abscheidende Schmiermittel wird anschließend unterstützt durch den Luftstrom, welcher gleichfalls durch den Schmiermittelkanal 32 strömt, in Richtung der inneren Gleitfläche 26 gefördert und gelangt hierbei durch die Abgabeöffnung 34 auf die innere Gleitfläche 26. Sobald einer der Schlitten 18 an der Abgabeöffnung 34 vorbeiläuft, wird das aus der Abgabeöffnung 34 austretende Schmiermittel von dem Schlitten 18 mitgerissen und an der inneren Gleitfläche 26 gleichmäßig verteilt. Dabei bildet sich ein gleichmäßiger Schmiermittelfilm an der geschabten Oberfläche der inneren Gleitfläche 26.

Mit dem erfindungsgemäßen Schmiersystem 22 ist es möglich, durch Einstellen des Verhältnisses Schmiermittel zu Gas die Menge an Schmiermittel exakt vorzugeben, mit der das Schmiersystem 22 die Gleitflächen 20 und 26 der Gleitbahn 10 mit Schmiermittel versorgt. Dabei kann die Menge an Schmiermittel in Abhängigkeit von einem oder mehreren Maschinenparametern kontinuierlich verändert werden, um eine möglichst gleichmäßige Ausbildung eines Schmierfilms auf den Gleitflächen 20 und 26 der Gleitbahn 10 zu gewährleisten.

Im dargestellten Ausführungsbeispiel sind die Bahnsegmente 12 der Gleitbahn 10 identisch ausgebildet, so dass in jedem Bahnsegment 12 eine Anschlussbohrung 28 mit einem Schmiermittelkanal 32 ausgebildet ist. Die Versorgung mit dem Schmiermittel-Gas-Gemisch erfolgt über die zentrale Schmiermittelversorgung 44, die über ein entsprechend ausgelegtes Leitungssystem mit den Anschlussbohrungen 28 verbunden ist.

Abhängig von der Größe der Flechtmaschine und der Anzahl der Gleitbahnsegmente muss nicht jedes Bahnsegment notwendigerweise eine Anschlussöffnung 28 aufweisen.

An einem Bahnsegment 12 können jedoch auch mehrere Anschlussbohrungen 28 mit mehreren Schmiermittelkanälen 32 ausgebildet sein. Des weiteren liegt es im Rahmen der Erfindung, die Abscheideeinrichtung 30 außerhalb des Bahnsegmentes 12 in Form einer separaten Einrichtung vorzusehen, welche über entsprechende Verbindungsleitungen unmittelbar mit entsprechend gestalteten Schmiermittelkanälen in Strömungsverbindung steht, um das Schmiermittel an die Schmierstellen zu leiten. Darüber hinaus ist es auch möglich, den Schmiermittelkanal 32 mit mehreren Abgabeöffnungen 34 zu versehen, welche entsprechend der zu verteilenden Menge an Schmier mittel verteilt über die innere Gleitfläche 26 und gegebenenfalls auch die weiteren Gleitflächen 20 des Bahnsegmentes 12 angeordnet ausgebildet sind.

### Bezugszeichenliste:

- 10: Gleitbahn
- 12: Bahnsegment
- 14: Befestigungsschrauben
- 16: Träger
- 18: Schlitten
- 20: obere Gleitfläche
- 22: Schmiersystem
- 24: Schmiernuten
- 26: innere Gleitfläche
- 28: Anschlussbohrung
- 30: Abscheideeinrichtung
- 32: Schmiermittelkanal
- 34: Abgabeöffnung
- 36: Abscheidedüse
- 38: kegelförmiger Abschnitt
- 40: Düsenkanal
- 42: Entspannungsraum
- 44: Schmiermittelversorgung
- 46: Versorgungsleitung
- 48: Prallwand

## Patentansprüche

1. Schmiersystem zum Schmieren einer Gleitfläche in einer Maschine, insbesondere einer Gleitfläche in einer Flechtmaschine, mit einer Schmiermittelversorgung (44), die zur Versorgung der Gleitfläche (20, 26) mit Schmiermittel mit mindestens einem Schmiermittelkanal (32) verbunden ist, welcher in mindestens einer an der oder nahe der Gleitfläche (20, 26) ausgebildeten Abgabeöffnung (34) endet,
**dadurch gekennzeichnet,**
**dass** die Schmiermittelversorgung (44) ein Schmiermittel-Gas-Gemisch mit einem vorgegebenen Verhältnis Schmiermittel zu Gas erzeugt, welches dem Schmiermittelkanal (32) zuzuführen ist, und
**dass** vor der Abgabeöffnung (34) des Schmiermittelkanals (32) vorzugsweise eine Abscheideeinrichtung (30) zum zumindest teilweisen Abscheiden des Schmiermittels aus dem Schmiermittel-Gas-Gemisch vorgesehen ist.

2. Schmiersystem nach Anspruch 1, **dadurch gekennzeichnet, dass** die Schmiermittelversorgung (44) zum Erzeugen des Schmiermittel-Gas-Gemisches mindestens eine Düse aufweist, welche eine vorgegebene Menge Schmiermittel in einem Gasstrom mit definiertem Volumenstrom zerstäubt.

3. Schmiersystem nach Anspruch 1 oder 2, **dadurch gekennzeichnet,**
**dass** die Schmiermittelversorgung (44) das Verhältnis Schmiermittel zu Gas durch Einstellen der Schmiermittelmenge und/oder des Gasvolumenstromes verändert.

4. Schmiersystem nach Anspruch 3, **dadurch gekennzeichnet, dass** die Schmiermittelversorgung (44) das Verhältnis Schmiermittel zu Gas in Abhängigkeit von mindestens einem Maschinenparameter, vorzugsweise der Relativgeschwindigkeit zwischen der Gleitfläche (20, 26) und einem an der Gleitfläche (20, 26) geführten Schlitten (18), einstellt.

5. Schmiersystem nach einem der vorhergehenden Ansprüche, **dadurch gekennzeichnet, dass** die Abscheideeinrichtung (30) in den Schmiermittelkanal (32) integriert ist.

6. Schmiersystem nach einem der vorhergehenden Ansprüche, **dadurch gekennzeichnet, dass** die Abscheideeinrichtung (30) zum Abscheiden des Schmiermittels aus dem Schmiermittel-Gas-Gemisch eine Abscheiderdüse (36) und einen in Strömungsrichtung gesehen nachgeordneten Entspannungsraum (42) aufweist, in welchem sich das Schmiermittel abschlägt, welcher seinerseits mit der Abgabeöffnung (34) des Schmiermittelkanals (32) in Strömungsverbindung steht.

7. Schmiersystem nach Anspruch 6, **dadurch gekennzeichnet, dass** die Düsenöffnung (40) der Abscheiderdüse (36) auf eine Prallfläche (48) im Entspannungsraum (42) derart gerichtet ist, dass das austretende Schmiermittel-Gas-Gemisch unmittelbar auf die Prallfläche (48) auftrifft.

8. Schmiersystem nach Anspruch 7, **dadurch gekennzeichnet, dass** die Prallfläche (48) durch eine in den Schmiermittelkanal (32) eingesetzte Prallplatte gebildet ist.

9. Schmiersystem nach einem der vorhergehenden Ansprüche, **dadurch gekennzeichnet, dass** der Schmiermittelkanal (32) in mehreren über die Gleitfläche (20, 26) verteilt ausgebildete Abgabeöffnungen (34) endet.

10. Schmiersystem nach einem der vorhergehenden Ansprüche, **dadurch gekennzeichnet, dass** die Schmiermittelversorgung (44) mit mehreren Schmiermittelkanälen (32) in Verbindung steht, wobei vorzugsweise für jeden Schmiermittelkanal (32) eine eigenständige Abscheideeinrichtung (30) vorgesehen ist.

11. Verfahren zum Schmieren einer Gleitfläche in einer Maschine, insbesondere einer Gleitflächen in einer Flechtmaschine, bei dem
ein Gemisch aus Schmiermittel und Gas erzeugt,
das Schmiermittel-Gas-Gemisch der zu schmierenden Gleitfläche (20, 26) zugeleitet,
bevor das Schmiermittel-Gas-Gemisch die Gleitfläche (20, 26) erreicht das Schmiermittel zumindest teilweise aus dem Schmiermittel-Gas-Gemisch abgeschieden und
das abgeschiedene Schmiermittel der Gleitfläche (20, 26) zur Schmierung zugeführt wird.

12. Verfahren nach Anspruch 11, **dadurch gekennzeichnet, dass** zum Erzeugen des Schmiermittel-Gas-Gemisches eine vorgegebene Menge Schmiermittel in einen Gasstrom mit vorgegebenem Volumenstrom, vorzugsweise durch zerstäuben, eingebracht wird.

13. Verfahren nach Anspruch 11, **dadurch gekennzeichnet, dass** die Schmiermittelmenge und/oder der Gasvolumenstrom in Abhängigkeit von mindestens einem Betriebsparameter der Maschinen eingestellt werden bzw. wird.
